# EUROPEAN PATENT APPLICATION

(11) **EP 4 563 546 A1**
(43) Date of publication of application: **04.06.2025**
(21) Application number: 23890199.5
(22) Date of filing: 29.06.2023
(51) Int. Cl.: C04B 35/26, C04B 35/622, C04B 35/64, H01F 41/02, H01F 1/34

(54) **POWER FERRITE MATERIAL, PREPARATION METHOD THEREFOR, AND USE THEREOF**

(30) Priority: 17.11.2022 CN 202211441494
(71) Applicant: Hengdian Group DMEGC Magnetics Co., Ltd., Jinhua, Zhejiang 322118 (CN)
(72) Inventor: ZHANG, Likang, Jinhua, Zhejiang 322118 (CN); LV, Donghua, Jinhua, Zhejiang 322118 (CN)
(74) Representative: Ricker, Mathias
(86) International application number: PCT/CN2023/103807
(87) International publication number: WO 2024/103757

(57) **Abstract**

Disclosed are a power ferrite material, a preparation method therefor, and a use thereof. The power ferrite material is composed of main components and auxiliary components; the main components comprise, in percentage by mole, 52.7-53 mol% of Fe₂O₃, 10-12 mol% of ZnO, and 35-37.3 mol% of MnO. On the basis of the total mass percentage of the main components, the auxiliary components comprise 0.08-0.1 wt% of CaCO₃, 0.02-0.04 wt% of Nb₂O₅, and 0.4-0.42 wt% of Co₂O₃. According to the present application, by matching reasonable content proportioning of the main components and the auxiliary components, the prepared power ferrite material has the characteristics of keeping low loss in a wide temperature range, and can meet the requirement of serving as a power ferrite of an automobile electronic product.

## Description

### TECHNICAL FIELD

Examples of the present application relate to the technical field of soft magnetic materials, for example, a power ferrite material, a preparation method therefor, and an application thereof.

### BACKGROUND

Soft magnetic ferrites are often used in the fields of communication and electronics due to their low coercivity and high permeability. Under a high-current and high-power application background, power ferrites are required to have a wide-temperature characteristic and a low loss characteristic at high temperature. The widely used MnZn power ferrites still need to be further improved in the characteristics of wide temperature range and low loss at high temperature.

CN 107573051A discloses a method for improving the strength of a MnZn power ferrite magnetic core without loss increasing. In the preparation of the MnZn power ferrite, 200-400 ppm of CaCO₃, 240-410 ppm of V₂O₅, and 100-200 ppm of ZrO₂ are added. In this application, the strength of the ferrite magnetic core can be effectively increased without loss increasing. However, in this application, the loss is not increased only in the temperature range of 25-100°C, and the loss reaches 400 kW/m³ at 100 °C, which shows the loss is still high at a high temperature.

CN 104078185A discloses a cobalt oxide-based ferrite magnetic core material which comprises a main material and an additive; calculated by molar ratio, the main material comprises: 56.1-64 mol of iron oxide, 15.3-22.1 mol of manganese oxide, 11-16.6 mol of zinc oxide, 1-1.3 mol of zirconium oxide, 0.03-0.1 mol of strontium oxide, 1.2-1.6 mol of lithium oxide, and 0.01-0.02 mol of rare-earth composite magnetoconductive powder. In this application, the rare-earth composite magnetoconductive powder which is added into the ferrite magnetic core material has a high magnetic energy product, and the finished product has characteristics of high grain boundary resistivity, low porosity, and a large and uniform grain size. However, the loss of the ferrite magnetic core material reaches 421 kW/m³ at 100°C, which cannot meet the performance requirements of low loss at a high temperature.

CN 105565790A relates to a YR950 wide temperature, high-direct current superposition, low power loss manganese-zinc ferrite material and a preparation method therefor. The preparation method in this application sequentially comprises: selecting raw materials, designing compositions and weighing materials, mixing raw materials, pre-sintering, adding impurities, secondary ball-milling, and molding-sintering. The manganese-zinc ferrite material in this application has stable performance and high magnetic permeability, and the power loss is less than 350 kW/m³ over the temperature range of 25-120 °C. However, this application has certain limitations because it fails to consider the loss at a higher temperature.

In view of shortcomings in the related art, it is necessary to provide a power ferrite material which has a wide-temperature characteristic and a low loss at a high temperature.

### SUMMARY

The following is a summary of the subject described in detail herein. This summary is not intended to limit the protection scope of the claims.

Examples of the present application provide a power ferrite material, a preparation method therefor, and an application thereof. The proportions of a main component and an auxiliary component are controlled rationally, and an oxidation process is adopted in the cooling stage of the sintering, so that the prepared power ferrite material has a low loss characteristic over a wide temperature range, and can be applied to automotive electronic products.

In a first aspect, an example of the present application provides a power ferrite material, and the power ferrite material is composed of a main component and an auxiliary component;
in a mole percentage, the main component comprises: 52.7-53mol% of Fe₂O₃, 10-12mol% of ZnO, and 35-37.3mol% of MnO;
based on a total mass of the main component by percentage, the auxiliary component comprises: 0.08-0. 1wt% of CaCO₃, 0.02-0.04wt% of Nb₂O₅, and 0.4-0.42wt% of Co₂O₃.

In the present application, the proportions of the main component and the auxiliary component are rationally controlled, and especially, the content ranges of Fe₂O₃ and Co₂O₃ are strictly controlled, so that the power ferrite material can meet the requirement of low loss within a wide temperature range of 25-150 °C, and can be widely used in automotive electronic products.

In a mole percentage, Fe₂O₃ in the main component has a mole percentage of 52.7-53mol%, which can be, for example, 52.7mol%, 52.8mol%, 52.9mol%, or 53mol%. However, the mole percentage is not limited to the listed values, and other unlisted values within the numerical range are also applicable.

In the present application, the mole percentage of Fe₂O₃ is controlled within a reasonable range, which can meet the requirement of low loss over a wide temperature range. Too much Fe₂O₃ will increase the eddy current loss, which is not conducive to reducing the high-temperature loss, and too little Fe₂O₃ cannot form enough iron ferrites to synergize with cobalt ferrites to reduce the magnetic hysteresis loss, so that it is difficult to achieve the wide-temperature characteristic or reduce the magnetic hysteresis loss.

In a mole percentage, ZnO in the main component has a mole percentage of 10-12mol%, which can be, for example, 10mol%, 10.5mol%, 11mol%, 11.5mol%, or 12mol%. However, the mole percentage is not limited to the listed values, and other unlisted values within the numerical range are also applicable.

In a mole percentage, MnO in the main component has a mole percentage of 35-37.3mol%, which can be, for example, 35mol%, 35.5mol%, 36mol%, 36.5mol%, or 37.3mol%. However, the mole percentage is not limited to the listed values, and other unlisted values within the numerical range are also applicable.

Based on a total mass of the main component by percentage, CaCO₃ in the auxiliary component has a mass percentage of 0.08-0.1wt%, which can be, for example, 0.08wt%, 0.085wt%, 0.09wt%, 0.095wt%, or 0. 1wt%. However, the mass percentage is not limited to the listed values, and other unlisted values within the numerical range are also applicable.

Based on a total mass of the main component by percentage, Nb₂O₅ in the auxiliary component has a mass percentage of 0.02-0.04wt%, which can be, for example, 0.02wt%, 0.025wt%, 0.03wt%, 0.035wt%, or 0.04wt%. However, the mass percentage is not limited to the listed values, and other unlisted values within the numerical range are also applicable.

Based on a total mass of the main component by percentage, Co₂O₃ in the auxiliary component has a mass percentage of 0.4-0.42wt%, which can be, for example, 0.4wt%, 0.405wt%, 0.41wt%, 0.415wt%, or 0.42wt%. However, the mass percentage is not limited to the listed values, and other unlisted values within the numerical range are also applicable.

In the auxiliary component, the mass percentage of Co₂O₃ is required to be strictly controlled. Too high Co₂O₃ content can increase the negative magnetocrystalline anisotropy constant K2, thereby increasing the magnetic hysteresis loss, and too low Co₂O₃ content cannot form enough cobalt ferrites, so that it is difficult to achieve the wide-temperature characteristic or reduce the magnetic hysteresis loss.

In a second aspect, an example of the present application provides a preparation method for the power ferrite material according to the first aspect, and the preparation method comprises the following steps:
(1) subjecting raw materials of the main component according to a formula amount to a first fine-grinding mixing, and sequentially performing a first spray granulation and a pre-sintering to obtain a pre-sintered material; and
(2) subjecting raw materials of the auxiliary component and the pre-sintered material obtained in step (1) according to a formula amount to a second fine-grinding mixing, and sequentially performing a second spray granulation, a compression molding, and a sintering to obtain the power ferrite material.

In the preparation method for the power ferrite material in the present application, the main component and the auxiliary component are fully mixed by fine-grinding for two times, and the oxidation process which is adopted in the cooling stage of the sintering process can effectively reduce the high-temperature loss. The preparation method has a simple process and a low cost, which is suitable for industrial production.

Preferably, in the first fine-grinding mixing in step (1), a mass ratio of a powder material, a grinding ball, and a grinding aid is 1:(5-7):(1.5-1.6), which can be, for example, 1:5:1.5, 1:5.5:1.52, 1:6:1.55, 1:6.5:1.58, or 1:7:1.6. However, the mass ratio is not limited to the listed values, and other unlisted values within the numerical range are also applicable.

Preferably, the grinding ball comprises a steel ball.

Preferably, the grinding aid comprises deionized water.

Preferably, the first fine-grinding mixing in step (1) is performed for a period of 55-65 min, which can be, for example, 55 min, 58 min, 60 min, 62 min, or 65 min. However, the period is not limited to the listed values, and other unlisted values within the numerical range are also applicable.

Preferably, after the first fine-grinding mixing in step (1), an average particle size is 1.3-1.5 µm, which can be, for example, 1.3 µm, 1.35 µm, 1.4 µm, 1.45 µm, or 1.5 µm. However, the average particle size is not limited to the listed values, and other unlisted values within the numerical range are also applicable.

Preferably, a mass of a binder used in the first spray granulation in step (1) is 8-12wt% of fine-ground particles, which can be, for example, 8wt%, 9wt%, 10wt%, 11wt%, or 12wt%. However, the mass is not limited to the listed values, and other unlisted values within the numerical range are also applicable.

Preferably, the binder comprises polyvinyl alcohol.

Preferably, the polyvinyl alcohol has a mass concentration of 7-8wt%, which can be, for example, 7wt%, 7.2wt%, 7.5wt%, 7.8wt%, or 8wt%. However, the mass concentration is not limited to the listed values, and other unlisted values within the numerical range are also applicable.

Preferably, the pre-sintering in step (1) is performed at a temperature of 900-950 °C, which can be, for example, 900 °C, 910 °C, 920 °C, 930 °C, 940 °C, or 950 °C. However, the temperature is not limited to the listed values, and other unlisted values within the numerical range are also applicable.

Preferably, the pre-sintering in step (1) is performed for a period of 5-9 h, which can be, for example, 5 h, 6 h, 7 h, 8 h, or 9 h. However, the period is not limited to the listed values, and other unlisted values within the numerical range are also applicable.

Preferably, in the second fine-grinding mixing in step (2), a mass ratio of a powder material, a grinding ball, and a grinding aid is 1:(5-7):(0.4-0.5), which can be, for example, 1:5:0.4, 1:5.5:0.42, 1:6:0.45, 1:6.5:0.48, or 1:7:0.5. However, the mass ratio is not limited to the listed values, and other unlisted values within the numerical range are also applicable.

Preferably, the grinding ball comprises a steel ball.

Preferably, the grinding aid comprises deionized water.

Preferably, the second fine-grinding mixing in step (2) is performed for a period of 150-180 min, which can be, for example, 150 min, 155 min, 160 min, 170 min, or 180 min. However, the period is not limited to the listed values, and other unlisted values within the numerical range are also applicable.

Preferably, after the fine-grinding mixing in step (2), an average particle size is 1-1.2 µm, which can be, for example, 1 µm, 1.05 µm, 1.1 µm, 1.15 µm, or 1.2 µm. However, the average particle size is not limited to the listed values, and other unlisted values within the numerical range are also applicable.

A mass of a binder used in the second spray granulation in step (2) is 8-12wt% of fine-ground particles, which can be, for example, 8wt%, 9wt%, 10wt%, 11wt%, or 12wt%. However, the mass is not limited to the listed values, and other unlisted values within the numerical range are also applicable.

Preferably, the binder comprises polyvinyl alcohol.

Preferably, the polyvinyl alcohol has a mass concentration of 7-8wt%, which can be, for example, 7wt%, 7.2wt%, 7.5wt%, 7.8wt%, or 8wt%. However, the mass concentration is not limited to the listed values, and other unlisted values within the numerical range are also applicable.

Preferably, the compression molding in step (2) is performed at a pressure of 6-8 MPa, which can be, for example, 6 MPa, 6.5 MPa, 7 MPa, 7.5 MPa, or 8 MPa. However, the pressure is not limited to the listed values, and other unlisted values within the numerical range are also applicable.

Preferably, the sintering in step (2) comprises a first heat treatment and a second heat treatment.

Preferably, the first heat treatment is: under a nitrogen atmosphere, heating to 1280-1300 °C, and holding the temperature for 6-8 h.

In the first heat treatment, the temperature is raised to 1280-1300 °C, which can be, for example, 1280 °C, 1285 °C, 1290 °C, 1295 °C, or 1300 °C. However, the temperature is not limited to the listed values, and other unlisted values within the numerical range are also applicable.

In the first heat treatment, the temperature is held for a period of 6-8 h, which can be, for example, 6 h, 6.5 h, 7 h, 7.5 h, or 8 h. However, the period is not limited to the listed values, and other unlisted values within the numerical range are also applicable.

Preferably, the second heat treatment is: under a nitrogen atmosphere, cooling to 1148-1152 °C, which can be, for example, 1148 °C, 1149 °C, 1150 °C, 1151 °C, or 1152 °C. However, the temperature is not limited to the listed values, and other unlisted values within the numerical range are also applicable.

Preferably, in the heating process, during the temperature increasing from 998-1002 °C to an end temperature, no oxygen is contained, and in the temperature-holding process, an oxygen content is 4-6%.

In the heating process, the temperature is raised from 998-1002 °C to an end temperature, which can be, for example, 998 °C, 999 °C, 1000 °C, 1001 °C, or 1002 °C. However, the temperature is not limited to the listed values, and other unlisted values within the numerical range are also applicable.

In the temperature-holding process, an oxygen content is 4-6%, which can be, for example, 4%, 4.5%, 5%, 5.5%, or 6%. However, the oxygen content is not limited to the listed values, and other unlisted values within the numerical range are also applicable.

Preferably, in the cooling process, an oxygen content during the temperature reducing from 1248-1252 °C to 1198-1202 °C is 2.8-3.3%, and an oxygen content during the temperature reducing from 1198-1202 °C to an end temperature is 0.6-1.2%.

In the second heat treatment of the sintering in the present application, an oxidation process is used for the cooling process, which can effectively improve the resistivity of the material and thus reduce the high-temperature loss compared with the conventional equilibrium oxygen partial pressure for the cooling process.

In the cooling process, the oxygen content during the temperature reducing from 1248-1252 °C to 1198-1202 °C is 2.8-3.3%, which can be, for example, 2.8%, 2.9%, 3%, 3.1%, 3.2%, or 3.3%. However, the oxygen content is not limited to the listed values, and other unlisted values within the numerical range are also applicable.

The temperature is reduced from 1248-1252 °C, which can be, for example, 1248 °C, 1249 °C, 1250 °C, 1251 °C, or 1252 °C. However, the temperature is not limited to the listed values, and other unlisted values within the numerical range are also applicable.

The temperature is reduced to 1198-1202 °C, which can be, for example, 1198 °C, 1199 °C, 1200 °C, 1201 °C, or 1202 °C. However, the temperature is not limited to the listed values, and other unlisted values within the numerical range are also applicable.

In the cooling process, the oxygen content during the temperature reducing from 1198-1202 °C to an end temperature is 0.6-1.2%, which can be, for example, 0.6%, 0.7%, 0.8%, 1%, 1.1%, or 1.2%. However, the oxygen content is not limited to the listed values, and other unlisted values within the numerical range are also applicable.

As a preferred technical solution for the preparation method in the second aspect of the present application, the preparation method comprises the following steps:
(1) subjecting raw materials of the main component according to a formula amount to a first fine-grinding mixing for 55-65 min, and sequentially performing a first spray granulation, and a pre-sintering which is carried out at 900-950 °C for 5-9 h to obtain a pre-sintered material;
   in the first fine-grinding mixing, a mass ratio of a powder material, a grinding ball, and a grinding aid is 1:(5-7):(1.5-1.6); after the first fine-grinding mixing, an average particle size is 1.3-1.5 µm; a mass of a binder used in the first spray granulation is 8-12wt% of fine-ground particles; the binder comprises polyvinyl alcohol; the polyvinyl alcohol has a mass concentration of 7-8wt%; and
(2) subjecting raw materials of the auxiliary component and the pre-sintered material obtained in step (1) according to a formula amount to a second fine-grinding mixing for 150-180 min, and sequentially performing a second spray granulation, a compression molding at 6-8 MPa, and a sintering to obtain the power ferrite material;
   in the second fine-grinding mixing, a mass ratio of a powder material, a grinding ball and a grinding aid is 1:(5-7):(0.4-0.5); after the second fine-grinding mixing, an average particle size is 1-1.2 µm; a mass of a binder used in the second spray granulation is 8-12wt% of fine-ground particles; the sintering comprises a first heat treatment and a second heat treatment; the first heat treatment is: under a nitrogen atmosphere, heating to 1280-1300 °C, and holding the temperature for 6-8 h; the second heat treatment is: under a nitrogen atmosphere, cooling to 1148-1152 °C; in the heating process, during the temperature increasing from 998-1002 °C to an end temperature, no oxygen is contained, and in the temperature-holding process, an oxygen content is 4-6%; in the cooling process, an oxygen content during the temperature reducing from 1248-1252 °C to 1198-1202 °C is 2.8-3.3%, and an oxygen content during the temperature reducing from 1198-1202 °C to an end temperature is 0.6-1.2%.

In a third aspect, an example of the present application provides an application of the power ferrite material according to the first aspect, and the power ferrite material is used in the field of automotive electronic products.

Compared with the related art, the examples of the present application have the following beneficial effects.
(1) For the power ferrite material provided in the examples of the present application, the content proportions of the main component and the auxiliary component are controlled rationally, and especially, the contents of Fe₂O₃ and Co₂O₃ are strictly controlled, so that the prepared power ferrite material has a low loss characteristic over a wide temperature range, wherein the power loss is as low as 306 kW/m³ at 25 °C, the power loss is as low as 280 kW/m³ at 100 °C, the power loss is as low as 297 kW/m³ at 120 °C, the power loss is as low as 329 kW/m³ at 140 °C, and the power loss is as low as 371 kW/m³ at 150 °C, and the power ferrite material can meet the requirements for being used in automotive electronic products.
(2) In the examples of the present application, the oxidation process is adopted in the second heat treatment of the sintering process, the corresponding oxygen content of different temperature is strictly controlled so as to improve the resistivity of the material effectively and reduce the high-temperature loss; the preparation method has a simple process and a low cost, which is suitable for industrial production.

After detailed description is read and understood, other aspects can be understood.

### DETAILED DESCRIPTION

The technical solutions of the present application are further explained by the embodiments below. Those skilled in the field should understand that the examples merely assist in understanding the present application and should not be regarded as a specific limitation to the present application.

### Example 1

This example provides a power ferrite material, and the power ferrite material is composed of a main component and an auxiliary component; in a mole percentage, the main component comprises: 52.8mol% of Fe₂O₃, 11mol% of ZnO, and 36.2mol% of MnO; based on a total mass of the main component by percentage, the auxiliary component comprises: 0.09wt% of CaCO₃, 0.03wt% of Nb₂O₅, and 0.41wt% of Co₂O₃.

A preparation method for the power ferrite material comprises the following steps:
(1) raw materials of the main component were subjected to a first fine-grinding mixing according to a formula amount for 60 min, and sequentially subjected to a first spray granulation, and a pre-sintering which was performed at 930 °C for 7 h to obtain a pre-sintered material;
   in the first fine-grinding mixing, a mass ratio of a powder material, a steel ball and deionized water was 1:6:1.55; after the first fine-grinding mixing, an average particle size was 1.4 µm; a mass of polyvinyl alcohol used in the first spray granulation was 10wt% of fine-ground particles; the polyvinyl alcohol had a mass concentration of 7.5wt%; and
(2) raw materials of the auxiliary component and the pre-sintered material obtained in step (1) were subjected to a second fine-grinding mixing according to a formula amount for 160 min, and sequentially subjected to a second spray granulation, a compression molding at 7 MPa, and a sintering to obtain the power ferrite material;
   in the second fine-grinding mixing, a mass ratio of a powder material, a steel ball and deionized water was 1:6:0.45; after the second fine-grinding mixing, an average particle size was 1.1 µm; a mass of polyvinyl alcohol used in the second spray granulation was 10wt% of fine-ground particles; the sintering comprised a first heat treatment and a second heat treatment; the first heat treatment was: under a nitrogen atmosphere, the temperature was raised to 1290 °C, and held for 7 h; the second heat treatment was: under a nitrogen atmosphere, the temperature was reduced to 1150 °C; in the heating process, during the temperature increasing from 1000 °C to an end temperature, no oxygen was contained, and in the temperature-holding process, an oxygen content was 5%; in the cooling process, an oxygen content during the temperature reducing from 1250 °C to 1200 °C was 3%, and an oxygen content during the temperature reducing from 1200 °C to an end temperature was 0.8%.

### Example 2

This example provides a power ferrite material, and the power ferrite material is composed of a main component and an auxiliary component; in a mole percentage, the main component comprises: 52.8mol% of Fe₂O₃, 10.5mol% of ZnO, and 36.7mol% of MnO; based on a total mass of the main component by percentage, the auxiliary component comprises: 0.0085wt% of CaCO₃, 0.025wt% of Nb₂O₅, and 0.405wt% of Co₂O₃.

A preparation method for the power ferrite material comprises the following steps:
(1) raw materials of the main component were subjected to a first fine-grinding mixing according to a formula amount for 58 min, and sequentially subjected to a first spray granulation, and a pre-sintering which was performed at 940 °C for 6 h to obtain a pre-sintered material;
   in the first fine-grinding mixing a mass ratio of a powder material, a steel ball and deionized water was 1:5.5:1.58; after the first fine-grinding mixing an average particle size was 1.35 µm; a mass of polyvinyl alcohol used in the first spray granulation was 9wt% of fine-ground particles; the polyvinyl alcohol had a mass concentration of 7.2wt%; and
(2) raw materials of the auxiliary component and the pre-sintered material obtained in step (1) were subjected to a second fine-grinding mixing according to a formula amount for 155 min, and sequentially subjected to a second spray granulation, a compression molding at 7.5 MPa, and a sintering to obtain the power ferrite material;
   in the second fine-grinding mixing, a mass ratio of a powder material, a steel ball and deionized water was 1:5.5:0.42; after the second fine-grinding mixing, an average particle size was 1.05 µm; a mass of polyvinyl alcohol used in the second spray granulation was 9wt% of fine-ground particles; the sintering comprised a first heat treatment and a second heat treatment; the first heat treatment was: under a nitrogen atmosphere, the temperature was raised to 1295 °C, and held for 6.5 h; the second heat treatment was: under a nitrogen atmosphere, the temperature was reduced to 1151 °C; in the heating process, during the temperature increasing from 1001 °C to an end temperature, no oxygen was contained, and in the temperature-holding process, an oxygen content was 4.5%; in the cooling process, an oxygen content during the temperature reducing from 1251 °C to 1201 °C was 2.9%, and an oxygen content during the temperature reducing from 1201 °C to an end temperature was 0.7%.

### Example 3

This example provides a power ferrite material, and the power ferrite material is composed of a main component and an auxiliary component; in a mole percentage, the main component comprises: 52.9mol% of Fe₂O₃, 11.5mol% of ZnO, and 35.6mol% of MnO; based on a total mass of the main component by percentage, the auxiliary component comprises: 0.095wt% of CaCO₃, 0.035wt% of Nb₂O₅, and 0.415wt% of Co₂O₃.

A preparation method for the power ferrite material comprises the following steps:
(1) raw materials of the main component were subjected to a first fine-grinding mixing according to a formula amount for 62 min, and sequentially subjected to a first spray granulation, and a pre-sintering which was performed at 915 °C for 8 h to obtain a pre-sintered material;
   in the first fine-grinding mixing, a mass ratio of a powder material, a steel ball and deionized water was 1:6.5:1.6; after the first fine-grinding mixing, an average particle size was 1.45 µm; a mass of polyvinyl alcohol used in the first spray granulation was 11wt% of fine-ground particles; the polyvinyl alcohol had a mass concentration of 7.8wt%; and
(2) raw materials of the auxiliary component and the pre-sintered material obtained in step (1) were subjected to a second fine-grinding mixing according to a formula amount for 170 min, and sequentially subjected to a second spray granulation, a compression molding at 6.5 MPa, and a sintering to obtain the power ferrite material;
   in the second fine-grinding mixing, a mass ratio of a powder material, a steel ball and deionized water was 1:6.5:0.48; after the second fine-grinding mixing, an average particle size was 1.15 µm; a mass of polyvinyl alcohol used in the second spray granulation was 11wt% of fine-ground particles; the sintering comprised a first heat treatment and a second heat treatment; the first heat treatment was: under a nitrogen atmosphere, the temperature was raised to 1285 °C, and held for 7.5 h; the second heat treatment was: under a nitrogen atmosphere, the temperature was reduced to 1149 °C; in the heating process, during the temperature increasing from 999 °C to an end temperature, no oxygen was contained, and in the temperature-holding process, an oxygen content was 5.5%; in the cooling process, an oxygen content during the temperature reducing from 1249 °C to 1199 °C was 3.2%, and an oxygen content during the temperature reducing from 1199 °C to an end temperature was 1%.

### Example 4

This example provides a power ferrite material, and the power ferrite material is composed of a main component and an auxiliary component; in a mole percentage, the main component comprises: 52.7mol% of Fe₂O₃, 10mol% of ZnO, and 37.3mol% of MnO; based on a total mass of the main component by percentage, the auxiliary component comprises: 0.08wt% of CaCO₃, 0.02wt% of Nb₂O₅, and 0.4wt% of Co₂O₃.

A preparation method for the power ferrite material comprises the following steps:
(1) raw materials of the main component were subjected to a first fine-grinding mixing according to a formula amount for 55 min, and sequentially subjected to a first spray granulation, and a pre-sintering which was performed at 950 °C for 5 h to obtain a pre-sintered material;
   in the first fine-grinding mixing, a mass ratio of a powder material, a steel ball and deionized water was 1:5:1.5; after the first fine-grinding mixing, an average particle size was 1.3 µm; a mass of polyvinyl alcohol used in the first spray granulation was 8wt% of fine-ground particles; the polyvinyl alcohol had a mass concentration of 7wt%; and
(2) raw materials of the auxiliary component and the pre-sintered material obtained in step (1) were subjected to a second fine-grinding mixing according to a formula amount for 150 min, and sequentially subjected to a second spray granulation, a compression molding at 8 MPa, and a sintering to obtain the power ferrite material;
   in the second fine-grinding mixing, a mass ratio of a powder material, a steel ball and deionized water was 1:5:0.4; after the second fine-grinding mixing, an average particle size was 1 µm; a mass of polyvinyl alcohol used in the second spray granulation was 8wt% of fine-ground particles; the sintering comprised a first heat treatment and a second heat treatment; the first heat treatment was: under a nitrogen atmosphere, the temperature was raised to 1300 °C, and held for 6 h; the second heat treatment was: under a nitrogen atmosphere, the temperature was reduced to 1152 °C; in the heating process, during the temperature increasing from 1002 °C to an end temperature, no oxygen was contained, and in the temperature-holding process, an oxygen content was 4%; in the cooling process, an oxygen content during the temperature reducing from 1252 °C to 1202 °C was 2.8%, and an oxygen content during the temperature reducing from 1202 °C to an end temperature was 0.6%.

### Example 5

This example provides a power ferrite material, and the power ferrite material is composed of a main component and an auxiliary component; in a mole percentage, the main component comprises: 53mol% of Fe₂O₃, 12mol% of ZnO, and 35mol% of MnO; based on a total mass of the main component by percentage, the auxiliary component comprises: 0.1wt% of CaCO₃, 0.04wt% of Nb₂O₅, and 0.42wt% of Co₂O₃.

A preparation method for the power ferrite material comprises the following steps:
(1) raw materials of the main component were subjected to a first fine-grinding mixing according to a formula amount for 65 min, and sequentially subjected to a first spray granulation, and a pre-sintering which was performed at 900 °C for 9 h to obtain a pre-sintered material;
   in the first fine-grinding mixing, a mass ratio of a powder material, a steel ball and deionized water was 1:7:1.6; after the first fine-grinding mixing, an average particle size was 1.5 µm; a mass of polyvinyl alcohol used in the first spray granulation was 12wt% of fine-ground particles; the polyvinyl alcohol had a mass concentration of 8wt%; and
(2) raw materials of the auxiliary component and the pre-sintered material obtained in step (1) were subjected to a second fine-grinding mixing according to a formula amount for 180 min, and sequentially subjected to a second spray granulation, a compression molding at 6 MPa, and a sintering to obtain the power ferrite material;
   in the second fine-grinding mixing, a mass ratio of a powder material, a steel ball and deionized water was 1:7:0.5; after the second fine-grinding mixing, an average particle size was 1.2 µm; a mass of polyvinyl alcohol used in the second spray granulation was 12wt% of fine-ground particles; the sintering comprised a first heat treatment and a second heat treatment; the first heat treatment was: under a nitrogen atmosphere, the temperature was raised to 1280 °C, and held for 8 h; the second heat treatment was: under a nitrogen atmosphere, the temperature was reduced to 1148 °C; in the heating process, during the temperature increasing from 998 °C to an end temperature, no oxygen was contained, and in the temperature-holding process, an oxygen content was 6%; in the cooling process, an oxygen content during the temperature reducing from 1248 °C to 1198 °C was 3.3%, and an oxygen content during the temperature reducing from 1198 °C to an end temperature was 1.2%.

### Example 6

This example provides a power ferrite material, and this example differs from Example 1 in that in step (2) of the preparation method for the power ferrite material, an oxygen content when the temperature was reduced from 1250 °C to 1200 °C was 2.5%, and an oxygen content when the temperature was reduced from 1200 °C to an end temperature was 0.5%. The rest is the same as in Example 1.

### Example 7

This example provides a power ferrite material, and this example differs from Example 1 in that in step (2) of the preparation method for the power ferrite material, an oxygen content when the temperature was reduced from 1250 °C to 1200 °C was 3.5%, and an oxygen content when the temperature was reduced from 1200 °C to an end temperature was 1.5%. The rest is the same as in Example 1.

### Example 8

This example provides a power ferrite material, and this example differs from Example 1 in that in the preparation method for the power ferrite material, the equilibrium oxygen partial pressure was adopted in the cooling process of step (2), and the oxygen partial pressure was 0.5%. The rest is the same as in Example 1.

### Comparative Example 1

This comparative example provides a power ferrite material, and this comparative example differs from Example 1 in that in the main component of the power ferrite material, a mole percentage of Fe₂O₃ was adjusted to 52.5mol%, and a mole percentage of MnO was adjusted to 36.5mol% accordingly. The rest is the same as in Example 1.

### Comparative Example 2

This comparative example provides a power ferrite material, and this comparative example differs from Example 1 in that in the main component of the power ferrite material, a mole percentage of Fe₂O₃ was adjusted to 53.5mol%, and a mole percentage of MnO was adjusted to 35.5mol% accordingly. The rest is the same as in Example 1.

### Comparative Example 3

This comparative example provides a power ferrite material, and this comparative example differs from Example 1 in that in the main component of the power ferrite material, a mole percentage of ZnO was adjusted to 9mol%, and a mole percentage of MnO was adjusted to 38.2mol% accordingly. The rest is the same as in Example 1.

### Comparative Example 4

This comparative example provides a power ferrite material, and this comparative example differs from Example 1 in that in the main component of the power ferrite material, a mole percentage of ZnO was adjusted to 13mol%, and a mole percentage of MnO was adjusted to 34.2mol% accordingly. The rest is the same as in Example 1.

### Comparative Example 5

This comparative example provides a power ferrite material, and this comparative example differs from Example 1 in that in the auxiliary component of the power ferrite material, a mass percentage of Co₂O₃ was adjusted to 0.38wt%. The rest is the same as in Example 1.

### Comparative Example 6

This comparative example provides a power ferrite material, and this comparative example differs from Example 1 in that in the auxiliary component of the power ferrite material, a mass percentage of Co₂O₃ was adjusted to 0.45wt%. The rest is the same as in Example 1.

### Comparative Example 7

This comparative example provides a power ferrite material, and this comparative example differs from Example 1 in that in the main component of the power ferrite material, MnO was replaced by Mn₃O₄ with an equimolar amount. The rest is the same as in Example 1.

### Comparative Example 8

This comparative example provides a power ferrite material, and this comparative example differs from Example 1 in that in the auxiliary component of the power ferrite material, Nb₂O₅ was replaced by SiO₂ with an equal mass. The rest is the same as in Example 1.

The power ferrite materials provided by Examples 1-8 and Comparative Examples 1-8 were test for power loss with an IWATSU-8218 Alternating Current B-H analyzer under a condition of 100 kHz and 200 mT. The results measured are shown in Table 1.

**Table 1**

| | Power loss (25 °C) (kw/m³) | Power loss (100 °C) (kw/m³) | Power loss (120 °C) (kw/m³) | Power loss (140 °C) (kw/m³) | Power loss (150 °C) (kw/m³) |
|---|---|---|---|---|---|
| Example 1 | 306 | 280 | 297 | 329 | 371 |
| Example 2 | 309 | 289 | 306 | 339 | 388 |
| Example 3 | 305 | 292 | 308 | 338 | 383 |
| Example 4 | 328 | 291 | 302 | 331 | 377 |
| Example 5 | 302 | 300 | 321 | 347 | 396 |
| Example 6 | 334 | 313 | 330 | 371 | 415 |
| Example 7 | 325 | 323 | 344 | 398 | 441 |
| Example 8 | 317 | 291 | 311 | 342 | 391 |
| Comparative Example 1 | 338 | 298 | 317 | 330 | 376 |
| Comparative Example 2 | 319 | 294 | 320 | 346 | 398 |
| Comparative Example 3 | 432 | 375 | 377 | 401 | 459 |
| Comparative Example 4 | 412 | 371 | 389 | 422 | 481 |
| Comparative Example 5 | 352 | 301 | 331 | 371 | 406 |
| Comparative Example 6 | 311 | 307 | 339 | 382 | 427 |
| Comparative Example 7 | 315 | 292 | 311 | 340 | 389 |
| Comparative Example 8 | 322 | 300 | 331 | 357 | 406 |

As can be seen from Table 1, the comparison of Example 1 and Examples 2-5 shows that in the present application, the content proportions of the main component and the auxiliary component are rationally controlled, and especially, the contents of Fe₂O₃ and Co₂O₃ are strictly controlled, so that the prepared power ferrite material has a low loss characteristic over a wide temperature range; the oxidation process adopted in the second heat treatment is combined, and the corresponding oxygen content at different temperature is strictly controlled so as to reduce the high-temperature loss effectively, and the power ferrite material can meet the requirements of being a high-performance power ferrite;
the comparison of Example 1 and Examples 6-7 shows that in the second heat treatment, whether the oxygen content of the cooling process is too low or too high, the overall loss is high; the comparison of Example 1 and Example 8 shows that in the second heat treatment, when the equilibrium oxygen partial pressure is used for cooling, there is an adverse effect on the improvement of the resistivity, and the loss is high;
the comparison of Example 1 and Comparative Examples 1-2 shows that in the main component, in a case where the content of Fe₂O₃ is too low, it is not conducive to achieving the wide-temperature characteristic and reducing the magnetic hysteresis loss, and in a case where the content of Fe₂O₃ is too high, the eddy current loss is increased, which is not conducive to reducing the high-temperature loss; the comparison of Example 1 and Comparative Examples 3-4 shows that in a case where the content of ZnO or MnO in the main component exceeds the reasonable range in the present application, the loss of the power ferrite material is significantly decreased; the comparison of Example 1 and Comparative Examples 5-6 shows that if the content of Co₂O₃ is too low, the power loss of the material is high, and if the content of Co₂O₃ is too much, the negative magnetocrystalline anisotropy constant K2 will be increased, thus increasing the magnetic hysteresis loss; the comparison of Example 1 and Comparative Examples 7-8 shows that in a case where MnO is replaced by Mn₃O₄ in the main component, the loss of the prepared ferrite material is increased to some extent, and in a case where Nb₂O₅ is replaced by SiO₂ in the auxiliary component, the composition of ferrite material is changed, and the loss is still increased.

In summary, for the power ferrite material provided in the present application, the content proportions of the main component and the auxiliary component are rationally controlled, and especially, the contents of Fe₂O₃ and Co₂O₃ are strictly controlled, so that the prepared power ferrite material has a low loss characteristic over a wide temperature range, wherein the power loss is as low as 306 kW/m³ at 25 °C, the power loss is as low as 280 kW/m³ at 100 °C, the power loss is as low as 297 kW/m³ at 120 °C, the power loss is as low as 329 kW/m³ at 140 °C, and the power loss is as low as 371 kW/m³ at 150 °C, and the power ferrite material can meet the requirements for being used in automotive electronic products.

In the present application, the oxidation process is adopted in the second heat treatment in the sintering process, and the corresponding oxygen content of different temperature is strictly controlled so as to improve the resistivity of the material effectively and reduce the high-temperature loss; the preparation method has a simple process and a low cost, which is suitable for industrial production.

The above is only specific embodiments of the present application, but the protection scope of the present application is not limited thereto. Those skilled in the art should understand that any changes or replacements, which can be easily thought of by a person skilled in the art within the scope of the technology disclosed in the present application, shall fall within the protection scope and disclosure scope of the present application.

## Claims

1. A power ferrite material, which is composed of a main component and an auxiliary component;
in a mole percentage, the main component comprises:
52.7-53mol% of Fe₂O₃;
10-12mol% of ZnO; and
35-37.3mol% of MnO;
based on a total mass of the main component by percentage, the auxiliary component comprises:
0.08-0. 1wt% of CaCO₃;
0.02-0.04wt% of Nb₂O₅; and
0.4-0.42wt% of Co₂O₃.

2. A preparation method for the power ferrite material according to claim 1, comprising the following steps:
(1) subjecting raw materials of the main component according to a formula amount to a first fine-grinding mixing, and sequentially performing a first spray granulation and a pre-sintering to obtain a pre-sintered material; and
(2) subjecting raw materials of the auxiliary component and the pre-sintered material obtained in step (1) according to a formula amount to a second fine-grinding mixing, and sequentially performing a second spray granulation, a compression molding, and a sintering to obtain the power ferrite material.

3. The preparation method according to claim 2, wherein in the first fine-grinding mixing in step (1), a mass ratio of a powder material, a grinding ball, and a grinding aid is 1:(5-7):(1.5-1.6).

4. The preparation method according to claim 3, wherein the grinding ball comprises a steel ball.

5. The preparation method according to claim 3 or 4, wherein the grinding aid comprises deionized water.

6. The preparation method according to any one of claims 2-5, wherein the first fine-grinding mixing in step (1) is performed for a period of 55-65 min.

7. The preparation method according to any one of claims 2-6, wherein after the first fine-grinding mixing in step (1), an average particle size is 1.3-1.5 µm.

8. The preparation method according to any one of claims 2-7, wherein a mass of a binder used in the first spray granulation in step (1) is 8-12wt% of fine-ground particles;
preferably, the binder comprises polyvinyl alcohol;
preferably, the polyvinyl alcohol has a mass concentration of 7-8wt%.

9. The preparation method according to any one of claims 2-8, wherein the pre-sintering in step (1) is performed at a temperature of 900-950 °C;
preferably, the pre-sintering in step (1) is performed for a period of 5-9 h.

10. The preparation method according to any one of claims 2-9, wherein in the second fine-grinding mixing in step (2), a mass ratio of a powder material, a grinding ball, and a grinding aid is 1:(5-7):(0.4-0.5);
preferably, the grinding ball comprises a steel ball;
preferably, the grinding aid comprises deionized water;
preferably, the second fine-grinding mixing in step (2) is performed for a period of 150-180 min;
preferably, after the second fine-grinding mixing in step (2), an average particle size is 1-1.2 µm.

11. The preparation method according to any one of claims 2-10, wherein a mass of a binder used in the second spray granulation in step (2) is 8-12wt% of fine-ground particles;
preferably, the binder comprises polyvinyl alcohol;
preferably, the polyvinyl alcohol has a mass concentration of 7-8wt%;
preferably, the compression molding in step (2) is performed at a pressure of 6-8 MPa.

12. The preparation method according to any one of claims 2-11, wherein the sintering in step (2) comprises a first heat treatment and a second heat treatment;
preferably, the first heat treatment is: under a nitrogen atmosphere, heating to 1280-1300 °C, and holding the temperature for 6-8 h;
preferably, the second heat treatment is: under a nitrogen atmosphere, cooling to 1148-1152 °C;
preferably, in the heating process, during the temperature increasing from 998-1002 °C to an end temperature, no oxygen is contained, and in the temperature-holding process, an oxygen content is 4-6%;
preferably, in the cooling process, an oxygen content is 2.8-3.3% during the temperature reducing from 1248-1252 °C to 1198-1202 °C, and an oxygen content is 0.6-1.2% during the temperature reducing from 1198-1202 °C to an end temperature.

13. The preparation method according to any one of claims 2-12, comprising the following steps:
(1) subjecting raw materials of the main component according to a formula amount to a first fine-grinding mixing for 55-65 min, and sequentially performing a first spray granulation, and a pre-sintering which is carried out at 900-950 °C for 5-9 h to obtain a pre-sintered material;
in the first fine-grinding mixing, a mass ratio of a powder material, a grinding ball, and a grinding aid is 1:(5-7):(1.5-1.6); after the first fine-grinding mixing, an average particle size is 1.3-1.5 µm; a mass of a binder used in the first spray granulation is 8-12wt% of fine-ground particles; the binder comprises polyvinyl alcohol; the polyvinyl alcohol has a mass concentration of 7-8wt%; and
(2) subjecting raw materials of the auxiliary component and the pre-sintered material obtained in step (1) according to a formula amount to a second fine-grinding mixing for 150-180 min, and sequentially performing a second spray granulation, a compression molding at 6-8 MPa, and a sintering to obtain the power ferrite material;
in the second fine-grinding mixing, a mass ratio of a powder material, a grinding ball and a grinding aid is 1:(5-7):(0.4-0.5); after the second fine-grinding mixing, an average particle size is 1-1.2 µm; a mass of a binder used in the second spray granulation is 8-12wt% of fine-ground particles; the sintering comprises a first heat treatment and a second heat treatment; the first heat treatment is: under a nitrogen atmosphere, heating to 1280-1300 °C, and holding the temperature for 6-8 h; the second heat treatment is: under a nitrogen atmosphere, cooling to 1148-1152 °C; in the heating process, during the temperature increasing from 998-1002 °C to an end temperature, no oxygen is contained, and in the temperature-holding process, an oxygen content is 4-6%; in the cooling process, an oxygen content is 2.8-3.3% during the temperature reducing from 1248-1252 °C to 1198-1202 °C, and an oxygen content is 0.6-1.2% during the temperature reducing from 1198-1202 °C to an end temperature.

14. An application of the power ferrite material according to claim 1, wherein the power ferrite material is used in the field of automotive electronic products.
